Europäisches Patentamt

European Patent Office

Office européen des brevets

(11) Publication number: **0 157 533 B1**

# EUROPEAN PATENT SPECIFICATION

(45) Date of publication of patent specification: **05.06.91**    (51) Int. Cl.⁵: **G01L  9/08**, G01L  9/06

(21) Application number: **85301893.5**

(22) Date of filing: **19.03.85**

(54) **Pressure measuring apparatus, e.g. a barometer.**

(30) Priority: **26.03.84 JP 58032/84**
        **25.06.84 JP 130676/84**

(43) Date of publication of application:
**09.10.85 Bulletin  85/41**

(45) Publication of the grant of the patent:
**05.06.91 Bulletin  91/23**

(84) Designated Contracting States:
**DE FR GB**

(56) References cited:
**DE-A- 2 934 093**
**US-A- 3 541 849**
**US-A- 4 297 872**
**US-A- 4 490 606**

(73) Proprietor: **SEIKO INSTRUMENTS INC.**
**31-1, Kameido 6-chome Koto-ku**
**Tokyo 136(JP)**

(72) Inventor: **Kyogoku, Hideaki c/o Seiko Instru-**
**ments &**
**Electronics Ltd. 6-31-1, Kameido**
**Koto-ku Tokyo(JP)**
Inventor: **Tamura, Fujio c/o Seiko Instruments**
**&**
**Electronics Ltd. 6-31-1, Kameido**
**Koto-ku Tokyo(JP)**

(74) Representative: **Caro, William Egerton et al**
**J. MILLER & CO. Lincoln House 296-302 High**
**Holborn**
**London WC1V 7JH(GB)**

**Description**

This invention relates to pressure measuring apparatus, such as, for example, barometers.

The publication "Review of Scientific Instruments", vol. 33, No. 1, Jan. 1962, pages 47 to 49, discloses measuring apparatus including a piezo-electric oscillator, and describes a change in the resonant frequency of the oscillator in response to loading.

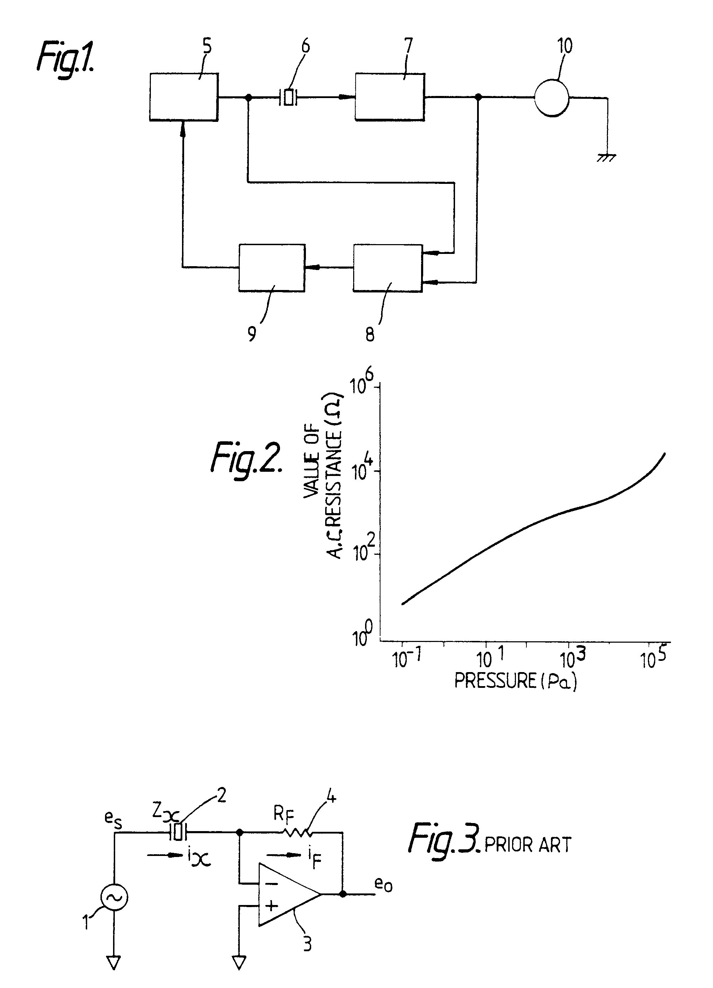

It is known that the AC resistance of a piezo-electric oscillator which is disposed inside a pressure vessel and which undergoes bending oscillation at a series of resonant frequencies, changes with pressure as shown in Figure 2. Therefore, if the AC resistance is known, the pressure corresponding to the AC resistance can be determined.

An example of a conventional circuit for measuring the AC resistance is shown in Figure 3. An oscillator 1 generates an AC voltage $e_s$ at a frequency f. An element 2 whose AC resistance $Z_x$ is to be measured, an amplifier 3, and a feedback resistor $R_F$ constitute a current voltage converter whose output voltage is $e_o$. The amplifier 3 is selected so that a current $i_x$ flowing through the element 2, and a current $i_F$ flowing through the feedback resistor $R_F$ are equal. The AC resistance Z of the element 2 is given by:

$$Z_x = R_F(e_s/e_o) \quad ... (1)$$

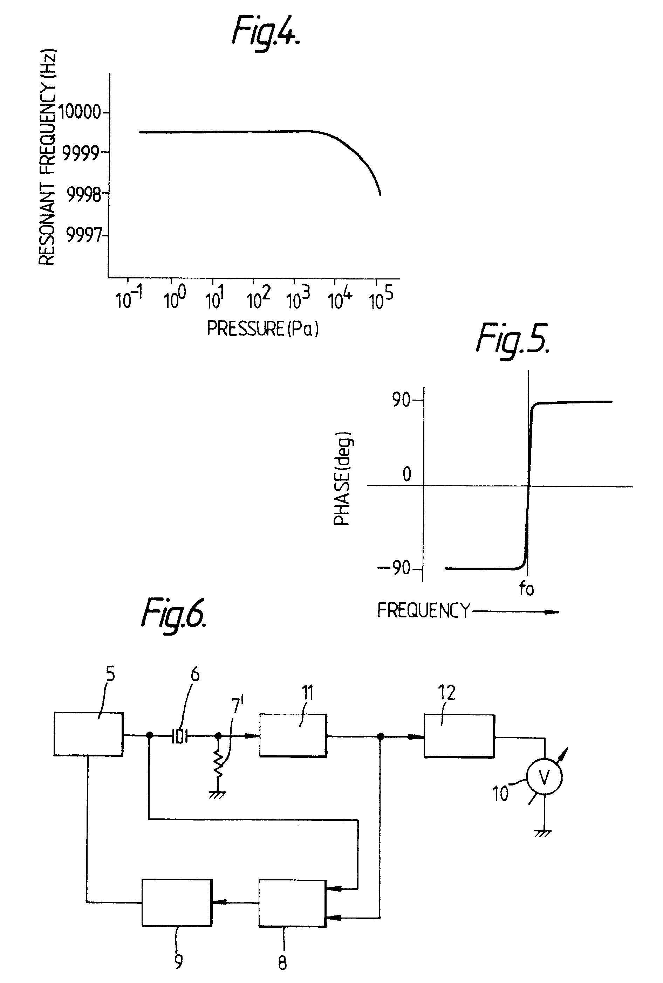

When a piezo-electric oscillator is used as the sensor of a barometer in the circuit of Figure 3, the resonant frequency of the piezo-electric oscillator changes with pressure as illustrated in Figure 4. Thus the frequency of the oscillator 1 must always search out the resonant frequency of the piezo-electric oscillator to effect measurement, and this is very troublesome and time consuming.

According to the present invention, there is provided a pressure measuring apparatus comprising: a frequency control circuit connected to an input of a piezo-electric oscillator whose AC resistance is indicative of a pressure to be measured; a current voltage converter connected to receive the output of said piezo-electric oscillator; display means connected to receive the output of said current voltage converter which output is indicative of the pressure to be measured, characterised by a phase comparator connected to receive the output of said frequency control circuit and to receive the output of said current voltage converter which, in operation, generates a voltage proportional to the phase difference, the output of the phase comparator being connected to a frequency control terminal of said frequency control circuit to form a feedback loop so that the frequency of the voltage applied to the piezo-electric oscillator always substantially coincides with the resonant frequency.

Preferably a low pass filter is connected to the output of the phase comparator and has its output connected to the frequency control circuit.

In one embodiment, the apparatus includes an amplifier for detecting current flowing through the piezo-electric oscillator at resonance from the terminal voltage of a resistor connected in series with said piezo-electric oscillator and for amplifying said terminal voltage, the output of said amplifier being indicative of the pressure to be measured.

In another embodiment, the apparatus includes an operational circuit connected to receive the output of said frequency control circuit and to receive the output of said current voltage converter, said display means being connected to receive the output of said operational circuit.

The invention is illustrated, merely by way of example, in the accompanying drawings, in which:-

Figure 1 is a block diagram of one embodiment of a barometer according to the present invention;

Figure 2 shows graphically the relationship between AC resistance and pressure for a piezo-electric oscillator;

Figure 3 is a circuit diagram of a conventional circuit for measuring AC resistance;

Figure 4 shows graphically the relationship between pressure and resonant frequency for a piezo-electric oscillator;

Figure 5 shows graphically the relationship between phase of impedance and frequency of a piezo-electric oscillator;

Figure 6 is a block diagram of another embodiment of a barometer according to the present invention; and

Figure 7 is a block diagram of a further embodiment of a barometer according to the present invention.

Throughout the drawings like parts have been designated by the same reference numerals.

Referring first to Figure 1 there is shown one embodiment of a barometer according to the present invention. A frequency control circuit 5, such as a voltage controlled oscillator, has a variable frequency range which is wider than the shift of resonant frequency, within the pressure range to be measured, of a piezoelectric oscillator 6. The output from the frequency control circuit 5 is applied to the piezoelectric oscillator 6 whose output is applied to a current voltage converter 7 which generates a voltage proportional to the current flowing through the piezoelectric oscillator 6.

The phase characteristics of the AC resistance of the piezoelectric oscillator 6, that is, the impedance, is zero (degrees) at the resonant frequency $f_o$ as shown in Figure 5. Therefore, the phase characteristics of the output voltage of the frequency control circuit 5 are the same as those of the output voltage of the current voltage converter 7 at the resonant frequency $f_o$, but the voltage output of the current voltage converter 7, having the same phase as the current flowing through the piezoelectric oscillator 6, lags behind the output voltage of the frequency control circuit 5 at frequencies lower than the resonant frequency.

Therefore, a phase comparator 8 detects the phase difference between the output voltage of the frequency control circuit 5 and the output voltage of the current voltage converter 7 and generates a voltage proportional to the phase difference. This proportional voltage is, in turn, applied to a frequency control terminal of the frequency control circuit 5, and a feedback loop is formed so that the frequency of the voltage applied to the piezoelectric oscillator 6 always coincides with the resonant frequency $f_o$ . A low pass filter 9 is connected to the phase comparator 8 so as to eliminate the high frequency component (noise) of the output of the phase comparator 8 and to stabilise the system.

From equation (1), the output of the current voltage converter 7 can be expressed by:

$$e_o = e_s . R_F/Z_x \quad ..... (2)$$

Since the circuit is constructed so that $e_s$ is always constant and since $R_F$ is constant, the product $e_s.R_F$ is constant ($e_s.R_F = K$), and $e_o$ is given by:

$$e_o = K.Y_x \quad ..... (3)$$

the reciprocal of the impedance $Z_x$ being the admittance $Y_x$.

If the output voltage of the current voltage converter is measured by a voltmeter 10, the admittance, which is proportional to the pressure to be measured, can be determined.

Figure 6 shows another embodiment of a barometer according to the present invention. A resistor 7' is connected in series with the piezoelectric oscillator 6, and the current at resonance flowing through the piezoelectric oscillator generates a potential across the resistor 7'. An amplifier 11 amplifies the terminal voltage of the resistor 7'. The output voltage of the amplifier 11 is applied both to the phase comparator 8 and to an amplifier 12. The output voltage of the amplifier 12 is measured by the voltmeter 10. Since the reading on the voltmeter is proportional to the current flowing through the piezoelectric oscillator at resonance, the pressure to which the piezoelectric oscillator is subjected can be determined. Though not described in detail in this embodiment, a DC voltmeter or DC ammeter can, of course, be used in place of the voltmeter 10 if a rectification circuit is provided at the output of the amplifier 12. The foregoing embodiment utilises admittance, which is the reciprocal of the AC resistance of the piezoelectric oscillator 6, as a quantity representing the pressure in place of the AC resistance value.

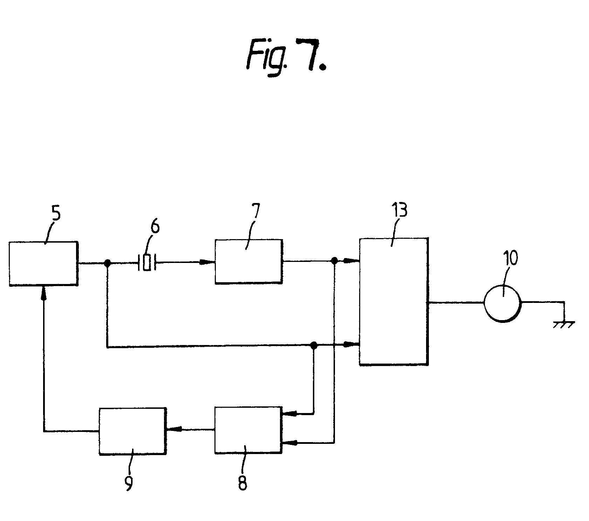

Figure 7 shows a further embodiment of a barometer according to the present invention. In this embodiment the output from the frequency control circuit 5 which has a frequency equal to the resonant frequency of the piezoelectric oscillator 6, and the output voltage of the current voltage converter 7 are applied to an operational circuit 13 which calculates the final value of equation (1). That is the output voltage of the current voltage converter 7 is $e_o$ and the output voltage of the frequency control circuit 5 is $e_s$ so that the operational circuit 13 calculate $e_s/e_o$ ($R_F$ is constant). Therefore, the output of this operational circuit 13 is applied to the voltmeter 10 which displays an AC resistance corresponding to the pressure to which the piezoelectric oscillator 6 is subjected.

Whilst the present invention has been described as applied to barometers it will be appreciated that it is applicable to other forms of pressure measuring apparatus.

## Claims

1. A pressure measuring apparatus comprising: a frequency control circuit (5) connected to an input of a piezo-electric oscillator (6) whose AC resistance is indicative of a pressure to be measured; a current voltage converter (7) connected to receive the output of said piezo-electric oscillator (6); display means (10) connected to receive the output of said current voltage converter which output is indicative of the pressure to be measured, characterised by a phase comparator (8) connected to receive the output of said frequency control circuit and to receive the output of said current voltage converter (7) which, in operation. generates a voltage proportional to the phase difference, the output of the phase comparator (8) being connected to a frequency control terminal of said frequency control circuit to form a feedback loop so that the frequency of the voltage applied to the piezo-electric oscillator (6) always substantially coincides with the resonant frequency.

2. Apparatus as claimed in claim 1 characterised in that a low pass filter (9) is connected to the output of the phase comparator (8) and has its output connected to the frequency control circuit.

3. Apparatus as claimed in claim 1 or 2 characterised by including an amplifier (11) for detecting current flowing through the piezo-electric oscillator (6) at resonance from the terminal voltage of a resistor (7') connected in series with said piezo-electric oscillator (6) and for amplifying said terminal voltage, the output voltage of said amplifier (11) being indicative of the pressure to be measured.

4. Apparatus as claimed in claim 1 or 2 characterised by including an operational circuit (13) connected to receive the output of said frequency control circuit (5) and to receive the output of said current voltage converter (7), said display means (10) being connected to receive the output of said operational circuit.

5. A barometer of the type which measures pressure from an AC resistance value of a piezoelectric oscillator disposed inside a pressure vessel, the barometer consisting essentially of: a frequency control circuit connected to the input of said piezo-electric oscillator; a current voltage converter connected to the output of said piezo-electric oscillator; a phase comparator connected to the output of said frequency control circuit and to the output of said current voltage converter; a voltmeter connected to said current voltage converter; a low pass filter connected to said phase comparator; an input means for applying the output of said low pass filter to said frequency control circuit, the AC voltage value of said piezo-electric oscillator indicating the ambient pressure of a gas around said piezo-electric oscillator.

**Revendications**

1. Un appareil de mesure de pression comprenant : un circuit de commande de fréquence (5) connecté à une entrée d'un oscillateur piézoélectrique (6) dont la résistance en alternatif est représentative d'une pression à mesurer; un convertisseur courant-tension (7) connecté de façon à recevoir le signal de sortie de l'oscillateur piézoélectrique (6); et des moyens de visualisation (10) qui sont connectés de façon à recevoir le signal de sortie du convertisseur courant-tension, ce signal de sortie étant représentatif de la pression à mesurer, caractérisé par un comparateur de phase (8) qui est connecté de façon à recevoir le signal de sortie du circuit de commande de fréquence et à recevoir le signal de sortie du convertisseur courant-tension (7), et qui, pendant le fonctionnement, génère une tension proportionnelle à la différence de phase, la sortie du comparateur de phase (8) étant connectée à une borne de commande de fréquence du circuit de commande de fréquence pour former une boucle de réatroaction, de façon que la fréquence de la tension qui est appliquée à l'oscillateur piézoélectrique (6) coïncide toujours pratiquement avec la fréquence de résonance.

2. Appareil selon la revendication 1, caractérisé en ce qu'un filtre passe-bas (9) est connecté à la sortie du comparateur de phase (8), et la sortie de ce filtre est connectée au circuit de commande de fréquence.

3. Appareil selon la revendication 1 ou 2, caractérisé en ce qu'il comprend un amplificateur (11) qui est destiné à détecter le courant qui circule dans l'oscillateur piézoélectrique (6) à la résonance, sur la base de la tension aux bornes d'une résistance (7') qui est connectée en série avec l'oscillateur piézoélectrique (6), et à amplifier cette tension aux bornes, la tension de sortie de cet amplificateur (11) étant représentative de la pression à mesurer.

4. Appareil selon la revendication 1 ou 2, caractérisé en ce qu'il comprend un circuit de calcul (13) qui est connecté de façon à recevoir le signal de sortie du circuit de commande de fréquence (5) et à recevoir le signal de sortie du convertisseur courant-tension (7), les moyens de visualisation (10) étant connectés de façon à recevoir le signal de sortie du circuit de calcul.

5. Un baromètre du type mesurant la pression sur la base d'une valeur de résistance en alternatif d'un oscillateur piézoélectrique qui est placé à l'intérieur d'une enceinte sous pression, le baromètre comprenant essentiellement les éléments suivants : un circuit de commande de fréquence qui est connecté à l'entrée de l'oscillateur piézoélectrique; un convertisseur courant-tension qui est connecté à la sortie de l'oscillateur piézoélectrique; un comparateur de phase qui est connecté à la sortie du circuit de commande de fréquence et à la sortie du convertisseur courant-tension; un voltmètre qui est connecté au converti sseurcourant-tension; un filtre passe-bas qui est connecté au comparateur de phase; et des moyens d'entrée qui sont destinés à appliquer le signal de sortie du filtre passe-bas au circuit de commande de fréquence, la valeur de la tension alternative de l'oscillateur piézoélectrique indiquant la pression ambiante d'un gaz qui entoure l'oscillateur piézoélectrique.

## Ansprüche

1. Druckmeßgerät mit einer Frequenzregelschaltung (5), die an einen Eingang eines piezoelektrischen Oszillators (6) angeschlossen ist, dessen Wechselstromwiderstand ein Maß für einen zu messenden Druck ist, mit einem Strom-Spannungs-Wandler (7), der das Ausgangssignal des piezoelektrischen Oszillators (6) aufnimmt und mit einer Anzeigeeinrichtung (10), welche das ein Maß für den zu messenden Druck darstellende Ausgangssignal des Strom-Spannungs-Wandlers aufnimmt, **gekennzeichnet durch** einen Phasenkomparator (8), der das Ausgangssignal der Frequenzregelschaltung und das Ausgangssignal des Strom-Spannungs-Wandlers (7) aufnimmt, der eine zur Phasendifferenz proportionale Spannung erzeugt und dessen Ausgang zur Bildung einer Rückkoppelschleife an einen Frequenzregelanschluß der Frequenzregelschaltung angeschlossen ist, so daß die Frequenz der in den piezoelektrischen Oszillator (6) eingespeisten Spannung immer im wesentlichen mit der Resonanzfrequenz zusammenfällt.

2. Gerät nach Anspruch 1, **dadurch gekennzeichnet**, daß an den Ausgang des Phasenkomparators (8) ein Tiefpaßfilter (9) angeschlossen ist, dessen Ausgang an die Frequenzregelschaltung angeschlossen ist.

3. Gerät nach Anspruch 1 oder 2, **gekennzeichnet durch** einen Verstärker (11) zur Detektierung von bei Resonanz von der Klemmenspannung (1) in Serie zum piezoelektrischen Oszillator (6) geschalteten Widerstandes (7') fließenden Stroms durch den piezoelektrischen Oszillator (6) sowie zur Verstärkung der Klemmenspannung, dessen Ausgangsspannung ein Maß für den zu messenden Druck ist.

4. Gerät nach Anspruch 1 oder 2, **gekennzeichnet durch** eine Operationsschaltung (13), die das Ausgangssignal der Frequenzregelschaltung (5) und das Ausgangssignal des Strom-Spannungs-Wandlers (7) aufnimmt und durch eine Einspeisung des Ausgangssignals der Operationsschaltung in die Anzeigeeinrichtung (10).

5. Barometer zur Messung von Druck über einen Wechselstrom-Widerstandswert eines in einer Druckdose angeordneten piezoelektrischen Oszillators mit im wesentlichen folgenden Elementen: eine an den Eingang des piezoelektrischen Oszillators angeschaltete Frequenzregelschaltung, einen an den Ausgang des piezoelektrischen Oszillators angeschalteten Strom-Spannungs-Wandler, einen an den Ausgang der Frequenzregelschaltung und den Ausgang des Strom-Spannungs-Wandlers angeschalteten Phasenkomparator, ein an den Strom-Spannungs-Wandler angeschaltetes Voltmeter, einen an den Phasenkomparator angeschaltetes Tiefpaßfilter, eine Eingangsanordnung zur Einspeisung des Ausgangssignals des Tiefpaßfilters in die Frequenzregelschaltung, wobei der Wechselspannungswert des piezoelektrischen Oszillators ein Maß für den Umgebungsgasdruck des piezoelektrischen Oszillators ist.

*Fig.1.*

*Fig.2.*

VALUE OF A.C RESISTANCE ($\Omega$)

PRESSURE (Pa)

$e_s$ $Z_x$ 2 $R_F$ 4

$i_x$ $i_F$

*Fig.3.* PRIOR ART

$e_o$

1 3

Fig.4.

Fig.5.

Fig.6.

Fig. 7.